# EUROPÄISCHE PATENTANMELDUNG

(11) **EP 3 798 419 A1**
(43) Veröffentlichungstag der Anmeldung: **31.03.2021**
(21) Anmeldenummer: 20198040.6
(22) Anmeldetag: 24.09.2020
(51) Int. Cl.: F01D 9/04, F01D 11/00, F01D 17/14, F01D 17/16, F01D 25/24

(54) **TURBINENGEHÄUSE FÜR ABGASTURBOLADER MIT NICHT-VARIABLER TURBINENLEITSCHAUFELGEOMETRIE**

(30) Priorität: 25.09.2019 DE 102019125823
(71) Anmelder: MTU Friedrichshafen GmbH, 88045 Friedrichshafen (DE)
(72) Erfinder: Hegner, Ronald, 88048 Friedrichshafen (DE); Stelzer, Christian, 88069 Tettnang (DE)
(74) Vertreter: Eisenführ Speiser

(57) **Zusammenfassung**

Die Erfindung betrifft ein Turbinengehäuse (12) für eine Turbine (10) eines Abgasturboladers wobei in einem Ringspalt (14) eine Leiteinrichtung zur Strömungsbeeinflussung des Gasstroms fest angeordnet ist, wobei die Leiteinrichtung eine Vorleitbeschaufelung (40) mit einer Anzahl von Leitschaufeln (41) aufweist, die umfänglich entlang des Ringspalts (14) angeordnet sind. Jede der Leitschaufeln (41) ist fest mit einem Grundkörper (43) verbunden, wobei dieser Grundkörper (43) an der Zarge gehalten ist. Dabei ist jede einzelne Leitschaufel (41) variabel aber fest an der Zarge (70) gehalten, sodass die einzelne Leitschaufel (41) um eine in axialer Richtung weisende Achse (SA) drehbar winkeleingestellt und fest an der Zarge (70) fixiert ist. Dies erfolgt dabei beispielsweise über eine formschlüssige Verbindung zwischen Grundkörper (43) und der Ausnehmung in der Zarge (70), bevorzugt mittels einer Kerbverzahnung (45). Dies vereinfacht die Struktur und Montage und insbesondere die flexible Anpassung an unterschiedliche Volumenströme.

## Beschreibung

Die Erfindung betrifft ein Turbinengehäuse gemäß dem Oberbegriff des Anspruchs 1 mit Vorleitbeschaufelung sowie eine Turbine oder Gasturbomaschine, insbesondere Abgasturbolader, mit dem Turbinengehäuse und eine Brennkraftmaschine mit einem Motor und dem Abgasturbolader.

Eine Turbine ist im Allgemeinen eine zu den Strömungsmaschinen gehörende Kraftmaschine, die einem Fluid, wie beispielsweise Wasser, Gas oder Dampf, Energie entzieht und diese in mechanische Energie wandelt. Dabei tritt typischerweise das Fluid zunächst durch eine feste Leiteinrichtung geleitet auf regelmäßig gekrümmte Schaufeln eines Turbinenrads, das angetrieben wird. Ihre Leistung gibt die Turbine an der Welle des Turbinenrads ab. Das Turbinenrad, auch als Turbinenrad bezeichnet, weist Schaufeln auf, die hier als Turbinenschaufeln bezeichnet werden. Die Schaufeln einer Vorleitbeschaufelung der Leiteinrichtung werden vorliegend als Leitschaufeln bezeichnet.

Eine Turbine bei einem Turbolader wird in Kraftahrzeugen zur Leistungssteigerung eingesetzt. Solche Turbolader, hier als Abgasturbolader bezeichnet, umfassen eine vorgenannte Turbine und einen Verdichter, die auf einer gemeinsamen Welle, der Turboladerwelle, angebracht sein können - ein solcher Abgasturbolader ist beispielsweise mit einem bevorzugten Turbinengehäuse einer Radialturbine in DE 10 2009 049 841 A1 beschrieben, deren FIG. 1 in der Zeichnung dieser Anmeldung wiedergegeben ist. Der Abgasstrom versetzt das Turbinenrad auf der Abgasabgabeseite in Rotation. Das an dem Turbinenrad angebrachte Drehmoment wird über die Welle auf ein Verdichterrad im Ansaugtrakt übertragen.

Ein in DE 3 831 687 A1 beschriebenes Konzept sieht für ein Turbinengehäuse verschiebbare Wandteile vor, wobei die Wandteile mit einer axialen Führung verbunden sind, wobei dazu entsprechende Abdichteinrichtungen und umfängliche Federsysteme zum axialen Verschieben der Gehäusewandteile vorgesehen sind.

Ein solche Turbine, in dem Fall Abgasturbine, kann insbesondere von dem Abgas eines Hubkolbenverbrennungsmotors der Brennkraftmaschine angetrieben werden, sodass mittels einer gemeinsamen Antriebswelle der Verdichter von der Turbine angetrieben ist und dadurch verdichtete Luft als Ladeluft den Brennräumen des Hubkolbenverbrennungsmotors zugeführt werden kann.

Eine eingangs genannte Abgasturbine weist damit regelmäßig ein Turbinengehäuse auf, welches einen Ringkanal begrenzt, von dem aus durch einen Ringspalt an dem Ringkanal das Abgas auf Turbinenschaufeln eines Turbinenrads in einem Turbinenradraum der Abgasturbine geleitet wird. Im Bereich des vorgenannten Ringspalts ist jene vorgenannte Leiteinrichtung mit einer Vorleitbeschaufelung mit den Leitschaufeln angeordnet.

Ein solches eingangs genanntes Turbinengehäuse für eine Turbine oder Gasturbomaschine, insbesondere einen Abgasturbolader, ist als ein Radialturbinengehäuse zur Aufnahme eines mit einer Welle um eine Achse drehbaren Turbinenrades ausgebildet und weist auf:
- eine Kanalspirale mit einem umfänglichen Gaseinlass, die einen peripheren Ringkanal ausbildet,
- einen Stutzen mit einem axialen Gasauslass, der einen zentralen Turbinenradraum zur Aufnahme des Turbinenrades aufweist,
- eine die Kanalspirale und den Stutzen verbindende Zarge, die einen Ringspalt seitlich begrenzt, welcher Ringspalt den Ringkanal mit dem Turbinenradraum fluidverbindet zur Durchführung eines Gasstroms vom Ringkanal zum Turbinenradraum, wobei
- in dem Ringspalt eine Leiteinrichtung fest angeordnet ist zur Strömungsbeeinflussung des Gasstroms, und
- die Leiteinrichtung eine Vorleitbeschaufelung mit einer Anzahl von Leitschaufeln aufweist, die umfänglich entlang des Ringspalts angeordnet sind, wobei
- eine Leitschaufel einzeln fest mit einem Grundkörper verbunden ist.

DE 10 2012 021792 B4 beschreibt eine solche eingangs genannte Turbine im Rahmen einer Turbine mit variabler Turbinengeometrie, d.h. mit Leitschaufeln, die um eine im Wesentlichen parallel zu der Rotationsachse der gemeinsamen Antriebswelle schwenkbare Schwenkachse eines Grundkörpers verschwenkbar gelagert sind an dem Grundkörper. Eine Verstellmechanik für diese schwenkbaren Leitschaufeln dient zum Verschwenken der Leitschaufeln, um dadurch die Anströmrichtung der Turbinenschaufeln und den Zuströmquerschnitt mit dem Abgas zu verändern. Diese sogenannte variable Turbinengeometrie ermöglicht es, den Turbinenbetrieb an unterschiedliche Volumenströme von Abgas anpassen zu können.

Wünschenswert ist es, den Turbinenbetrieb an unterschiedliche Volumenströme von Abgas anpassen zu können, unter Beibehaltung aber Vereinfachung einer vorgenannten Leiteinrichtung mit Vorleitbeschaufelung eines Abgasturboladers.

An dieser Stelle setzt die Erfindung an, deren Aufgabe es ist, eine eingangs genannte Vorrichtung, insbesondere ein Turbinengehäuse, eine Turbine oder eine Gasturbomaschine, insbesondere einen Abgasturbolader und eine Brennkraftmaschine mit einem Motor und einem Abgasturbolader anzugeben, bei dem die Vorleitbeschaufelung einer Leiteinrichtung zur Anpassung an unterschiedliche Volumenströme in anderer, insbesondere verbesserter und/oder vereinfachter Weise ausgebildet ist. Insbesondere soll eine Leitschaufel der Vorleitbeschaufelung in bevorzugter Weise in der Leiteinrichtung angebracht sein.

Die Aufgabe wird durch die Erfindung mit einem Turbinengehäuse des Anspruchs 1 gelöst für eine Turbine oder Gasturbomaschine.

Dazu geht die Erfindung aus von einem Turbinengehäuse für eine Turbine oder Gasturbomaschine, insbesondere einen Abgasturbolader, das als ein Radialturbinengehäuse zur Aufnahme eines mit einer Welle um eine Achse drehbaren Turbinenrades gemäß der eingangs genannten Art. Das heißt das Turbinengehäuse weist auf:
- eine Kanalspirale mit einem umfänglichen Gaseinlass, die einen peripheren Ringkanal ausbildet,
- einen Stutzen mit einem axialen Gasauslass, der einen zentralen Turbinenradraum zur Aufnahme des Turbinenrades aufweist,
- eine die Kanalspirale und den Stutzen verbindende Zarge, die einen Ringspalt seitlich begrenzt, welcher Ringspalt den Ringkanal mit dem Turbinenradraum fluidverbindet zur Durchführung eines Gasstroms vom Ringkanal zum Turbinenradraum, wobei
- in dem Ringspalt eine Leiteinrichtung fest angeordnet ist zur Strömungsbeeinflussung des Gasstroms, und
- die Leiteinrichtung eine Vorleitbeschaufelung mit einer Anzahl von Leitschaufel aufweist, die umfänglich entlang des Ringspalts angeordnet sind, wobei
- eine Leitschaufel einzeln fest mit einem Grundkörper verbunden ist.

Erfindungsgemäß ist zur Lösung der Aufgabe weiter vorgesehen, dass der Grundkörper an der Zarge gehalten ist, wobei
- der Grundkörper mit einer einzelnen Leitschaufel variabel aber fest an der Zarge gehalten ist, derart, dass
   die einzelne Leitschaufel um eine in axialer Richtung weisende Achse drehbar winkeleingestellt und fest an der Zarge fixiert ist.

Die Erfindung führt, ausgehend von dem Turbinengehäuse auch auf eine Turbine oder Gasturbomaschine des Anspruchs 14, insbesondere einen Abgasturbolader, mit einem Turbinengehäuse.

Die Erfindung führt auch auf eine Brennkraftmaschine des Anspruchs 15 mit einem Motor und einer Turbine oder Gasturbomaschine, insbesondere einem Abgasturbolader.

Vorteilhafte Weiterbildungen der Erfindung sind den Unteransprüchen zu entnehmen, die im Einzelnen vorteilhafte Möglichkeiten angeben, das oben erläuterte Konzept im Rahmen der Aufgabenstellung sowie hinsichtlich weiterer Vorteile zu realisieren.

Vorteilhaft ist vorgesehen, dass der Grundkörper zylindrisch ist.

Im Rahmen einer bevorzugten Weiterbildung ist vorgesehen, dass der Grundkörper und/oder die Leitschaufe in einer Ausnehmung, insbesondere Bohrung, in der Zarge gehalten ist.

Im Rahmen einer bevorzugten Weiterbildung ist vorgesehen, dass der Grundkörper auf der Aussenseite und die Ausnehmung auf der Innenseite ein für einen gegenseitigen Formschluss ausgebildetes komplementäres Profil aufweisen.

Im Rahmen einer bevorzugten Weiterbildung ist vorgesehen, dass der Grundkörper und die Ausnehmung in der Zarge eine Kerbverzahnung aufweisen.

Im Rahmen einer bevorzugten Weiterbildung ist vorgesehen, dass die Leitschaufel über die Ausnehmung mit dem Grundkörper entnehmbar ist.

Im Rahmen einer bevorzugten Weiterbildung ist vorgesehen, dass der Grundkörper ein auf einer zur Leitschaufel gegenüberliegenden Seite angebrachtes Auszugsmittel, insbesondere Auszugsgewinde aufweist.

Im Rahmen einer bevorzugten Weiterbildung ist vorgesehen, dass die Leitschaufel und der Grundkörper federvorgespannt gegen einen Anschlag in der Ausnehmung in der Zarge gehalten ist.

Im Rahmen einer bevorzugten Weiterbildung ist vorgesehen, dass die Leitschaufel mit einem Leitschaufelfuss auf dem Grundkörper befestigt ist und an einem dem Leitschaufelfuss gegenüberliegenden Leitschaufelkopf spaltfrei an einer der Ausnehmung gegenüberliegenden Innenseite der Zarge anliegt, insbesondere dicht aufsitzt

Im Rahmen einer bevorzugten Weiterbildung ist vorgesehen, dass die Zarge und die Kanalspirale verschraubt sind

Im Rahmen einer bevorzugten Weiterbildung ist vorgesehen, dass die ausnehmungseitige Verschraubung einen Abgasaustrittskrümmer mithält.

Im Rahmen einer bevorzugten Weiterbildung ist vorgesehen, dass der Abgasaustrittskrümmer mit Dichtring (kompressibel, expandiertes Graphit) gesichert die Feder zur Federvorspannung des Grundkörpers hält.

Im Rahmen einer bevorzugten Weiterbildung ist vorgesehen, dass die Leitschaufel mittels einem Additiv-Herstellungsverfahren hergestellt ist.

Ausführungsformen der Erfindung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- FIG. 1: eine Ansicht einer Gasradialturbomaschine in einer Teilschnittansicht gemäß dem Stand der Technik;
- FIG. 2: eine perspektivische Ansicht einer Gasturbomaschine mit einem Turbinenrad, insbesondere für einen Abgasturbolader, und mit einem Turbinengehäuse gemäß einer bevorzugten Ausführungsform, nämlich als ein Radialturbinengehäuse mit Ringkanal, Turbinenradraum und Leiteinrichtung einer Vorleitbeschaufelung in einem Ringspalt zwischen Ringkanal und Turbinenradraum
- FIG. 3A, FIG. 3B: eine Ansicht des Turbinengehäuses in FIG.3B gemäß der bevorzugten Ausführungsform in einer Teilschnittansicht mit Details der Anbrinung der Vorleitbeschaufelung in dem Ringspalt gemäß FIG. 3A.

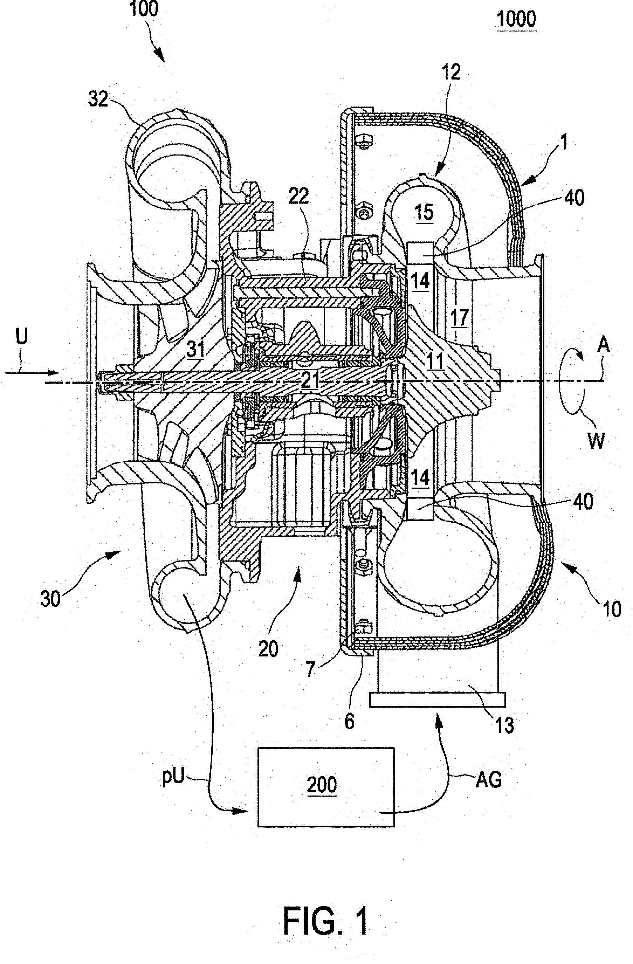

Ein symbolisch dargestellter Motor 200 einer Brennkraftmaschine 1000, insbesondere ein Hubkolbenverbrennungsmotor, beaufschlagt den Abgasturbolader, wie anhand von FIG. 1 erläutert, mit Abgas AG. Der Abgasturbolader weist die Turbine 10 und den Verdichter 30 auf. Das Abgas AG des Motors 200 wird durch eine Abgasleitung der Turbine 10 --wie in FIG. 1 symbolisch dargestellt- zugeführt, wodurch das Turbinenrad 11 der Turbine 10 angetrieben wird. Mit der Turbine 10 wird somit der Verdichter 30 angetrieben und dadurch kann Umgebungsluft U angesaugt und verdichtet werden. Anschließend wird die verdichtete Luft pU wie in FIG. 1 symbolisch dargestellt durch eine Ladeluftleitung den Brennräumen des Motors 200 zugeführt.

Hier nicht gezeigt, kann eine Ladeluftkühlung die verdichtete Luft vor dem Einleiten in die Brennräume des Hubkolbenverbrennungsmotors kühlen.

Die als Abgasturbolader ausgebildete Gasturbomaschine 100 der FIG. 1 hat eine Turbine 10 mit einem Berstschutz 1 sowie ein Lager 20 und einen Verdichter 30. Ein Turbinenrad 11 der Turbine 10 sitzt auf einer im Lager 20 eines Lagergehäuses 22 gehaltenen Welle 21 zusammen mit einem Verdichterrad 31 des Verdichters. Das Verdichterrad 31 ist in einem Verdichtergehäuse 32 angeordnet, das - entsprechend der Ausbildung des Verdichters 30 als Radialverdichter - als Radialgehäuse gebildet ist, welches axial angeströmt wird. Ein Turbinengehäuse 12 und das Verdichtergehäuse 32 sind an dem Lagergehäuse 22 angebracht.

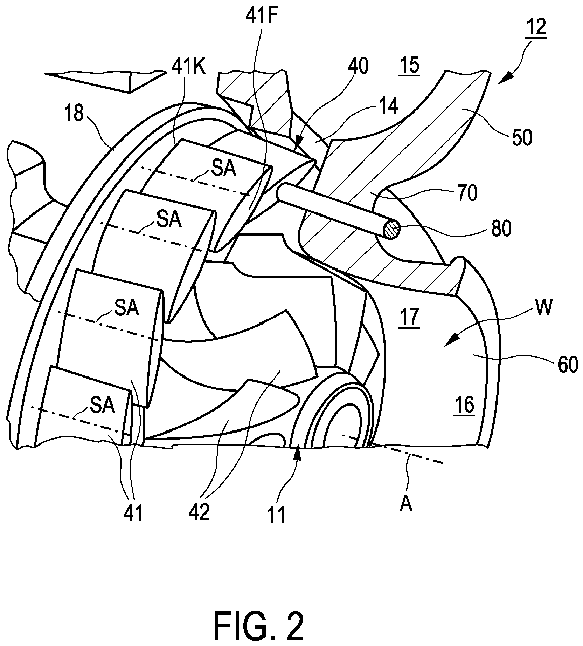

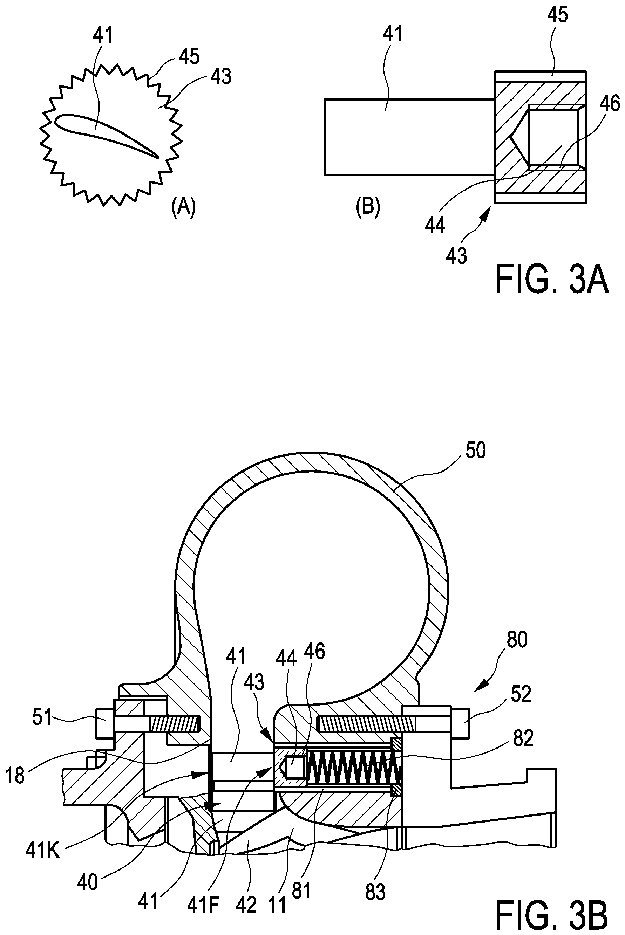

Das Turbinenrad 11 der Turbine 10 ist vorliegend in dem als Radialgehäuse ausgebildeten Turbinengehäuse 12 angeordnet. Abgas einer nicht näher dargestellten Brennkraftmaschine tritt in das Turbinengehäuse 12 radial in einen Stutzen mit einer Turbineneinlassöffnung 13 ein und verlässt dieses entlang einer Achse A und versetzt dabei das Turbinenrad 11 in Drehung, welches wiederum über die Welle 21 rotationsbeweglich in Rotation W das Verdichterrad 31 antreibt. Dazu wird das Abgas AG zunächst von einem peripheren Ringkanal 15 durch eine feste Leiteinrichtung in einem Ringspalt 14 zwischen Ringkanal 15 und Turbinenradraum 17 mit einer weiter in FIG. 2 und FIG. 3 näher erläuterten Vorleitbeschaufelung 40 geleitet auf regelmäßig gekrümmte Turbinenschaufeln des Turbinenrads 11.

FIG. 2 zeigt eine aufgeschnittene Teildarstellung einer Turbine des Abgasturboladers gemäß FIG. 1 mit der Leiteinrichtung umfassend die im Detail dargestellte Vorleitbeschaufelung 40 im Ringspalt 14 zwischen dem peripheren Ringkanal 15 und dem Turbinenradraum 17 für den Abgasturbolader mit einer Anzahl von Leitschaufeln 41.

Durch die in FIG. 1 gezeigte Turbineneinlassöffnung an einem Eintrittskanal 13 kann Abgas in die Turbine 10 eingeleitet und durch eine Turbinenauslassöffnung 16 kann das Abgas AG aus einem Turbinenradraum 17 mit dem Turbinenrad 11 der Turbine 10 ausgeleitet werden.

Das Turbinengehäuse 12 begrenzt insofern einen das Turbinenrad 11 nahezu vollständig tangential umlaufenden Ringkanal 15. Das Abgas AG wird durch die Turbineneinlassöffnung in den Eintrittskanal 13 und wie oben beschrieben in den Ringkanal 15 eingeleitet und strömt anschließend in radialer Richtung durch den Ringspalt 14 in Richtung zu den Turbinenschaufeln 42 des Turbinenrades 11.

Dabei sind im Sinne des Konzepts der Erfindung im Bereich des Ringspalts 14 eine Vielzahl von Leitschaufeln 41 angeordnet. Von den insgesamt beispielsweise fünfzehn Leitschaufeln 41 sind aufgrund der Darstellung nur einige sichtbar. Die Leitschaufeln sind im gesamten Bereich des nahezu vollständig umlaufenden, ausgebildeten Ringspaltes 14 vorhanden und stehen am Schaufelkopf 41K spaltfrei am Gehäuserücken 18 des Turbinengehäuses 12 an und sind jeweils mit einer Schaufelanbringung 80 verbunden, welche in FIG.3 näher erläutert ist und an der Zarge ansetzt.

Demnach zeigt FIG. 2 die bevorzgute Ausführungsform eines Turbinengehäuses 12 für eine Turbine 10 oder Gasturbomaschine 100, insbesondere einen Abgasturbolader wie er in FIG. 1 gezeigt ist, das als ein Radialturbinengehäuse zur Aufnahme eines mit einer Welle 21 um eine Achse A drehbaren Turbinenrades 11, ausgebildet ist. Das Turbinengehäuse 12 weist auf:
- eine Kanalspirale 50 mit einem umfänglichen Gaseinlass einer Turbineneinlassöffnung an dem Eintrittskanal 13, die einen peripheren Ringkanal 15 ausbildet,
- einen Stutzen 60 mit einem axialen Gasauslass mit einer Turbinenauslassöffnung 16, der einen zentralen Turbinenradraum 17 zur Aufnahme des Turbinenrades 11 aufweist,
- eine die Kanalspirale 50 und den Stutzen 60 verbindende Zarge 70, die einen Ringspalt 14 seitlich begrenzt, welcher Ringspalt 14 den Ringkanal 15 mit dem Turbinenradraum 17 fluidverbindet zur Durchführung eines Gasstroms, nämlich Abgas AG, vom Ringkanal 15 zum Turbinenradraum 17, wobei
- in dem Ringspalt 14 eine Leiteinrichtung fest angeordnet ist zur Strömungsbeeinflussung des Gasstroms, und
- die Leiteinrichtung eine Vorleitbeschaufelung 40 mit einer Anzahl von Leitschaufel 41 aufweist, die umfänglich entlang des Ringspalts 14 angeordnet sind, wobei
- eine Leitschaufel 41 einzeln fest an ihrem Schaufelfuß 41F mit einem Grundkörper verbunden ist, der noch anhand von FIG. 3 erläutert wird.

Gemäß dem Konzept der Erfindung ist - wie bereits in FIG.2 erkennbar-- die Schaufelanbringung 80 in der Zarge 70 gehalten.

FIG.3A zeigt zunächst in einer Draufsicht (A) und einer Seitenansicht (B) wie eine Leitschaufel 41 einzeln fest an ihrem Schaufelfuß 41F mit einem Grundkörper 43 verbunden ist. Der dem Schaufelkopf 41K gegenüberliegende Schaufelfuß 41F ist stoffschlüssig mit dem hier zylindrischen Grundkörper 43 verbunden. Der Grundkörper 43 weist ausserdem eine aussenliegende Zahnriffelung 45 und ein Sackloch 44 mit einem Auszugs- Innengewinde 46 auf. Die Leitschaufel 41 mit Grundkörper 43 kann in einem Additiv-Herstellungsverfahren gefertigt werden.

Die FIG. 3B zeigt zunächst in einer Detaildarstellung um 90° gedreht das Profil der Leitschaufel 41 in der Anbringung und zur Lagerung derselben mit der Schaufelanbringung 80 in dem achsparallelen Schnitt sowie Teile des Abgasaustrittskrümmers zur Einführung des Abgases in den peripheren Ringkanal 15 der Kanalspirale 50.

In dem achsparallelen Schnitt der Turbine 10 in der FIG. 3B ist am Turbinengehäuse 12 die Kanalspirale 50 des Turbinengehäuses 12 vom in FIG. 1 gezeigten Eintrittskanal 13 und der vorgenannten Ringspalt 14 in einem Schnitt entlang der in FIG. 2 gezeigten Achse A erkennbar. Die Kanalspirale 50 ist über zwei sich gegenüberliegenden Schrauben 51, 52 an der Zarge 70 fixiert; die Schraube 52 hält auch Teile des Abgasaustrittskrümmers auf einem Auszugsloch 81. In dem Auszugsloch 81 ist die Leitschaufel 41 einzeln und als Teil der Vorleitbeschaufelung 40 duch eine Feder 82 hineingedrückt und gehalten. Somit ist die Leitschaufel 41 als Teil der Vorleitbeschaufelung 40 hier mit Grundkörper 43 in einem Querschnitt gezeigt. Auch das Sackloch 44 ist hier mit Auszugs- Innengewinde 46 gezeigt. Eine Dichtung 83 ist als kompressibler Dichtring gebildet, der aus expandiertem Graphit besteht. Dadurch wird eine Gasleckage vermieden und somit ein Kurzschluss längs einer Verzahnung.

Konkret ist der Grundkörper 43 dazu ausgebildet, an der Zarge 70 gehalten zu werden, nämlich mittels der aussenliegenden Zahnriffelung 45 zur Bildung einer Kerbverzahnung in einem Auszugsloch 81 der Schaufelanbringung 80. Dabei ist der Grundkörper 43 mit einer einzelnen Leitschaufel 41 variabel aber fest an der Zarge 70 gehalten, derart, dass die einzelne Leitschaufel 41 um eine in axialer Richtung weisende Achse SA drehbar winkel eingestellt und fest an der Zarge fixiert ist. Die Leitschaufel steht wie schon erwähnt mit ihrem Schaufelkopf 41K spaltfrei am Gehäuserücken 18 auf und ist an ihrem Schaufelfuß 41F mit dem Grundkörper 43 stoffschlüssig verbunden.

Hinsichtlich der gelagerten Anbringung der Leitschaufel 41, ist auch zu erkennen, dass diese im Rahmen der Kerbverzahnung angebracht ist und dabei unterschiedliche Winkelpositionen der einzelnen Leitschaufeln ermöglicht wird. Konkret ist die Lagerung anhand des zylindrischen Grundkörpers 43 realisiert, mit dem eine der Mehrzahl von Leitschaufeln 41 dank formschlüssigem Außenprofil in unterschiedlichen Winkeleinbaupositionen eingesetzt werden können. Insofern ersetzt der zylindrische Grundkörper 43 mit den so im Rahmen der Kerbverzahnung eingesetzten Leitschaufeln 41 einen Leitring bei fixierter Schaufelgeometrie, bzw. die schwenkbaren Leitschaufeln der DE 10 2014 005 852 A1. Es handelt sich insofern um eine variable aber fixierte Schaufelgeometrie. Jede einzelne Leitschaufel 41 ist in einem als Bohrung in der Zarge 70 gebildeten Auszugsloch 81 der Schaufelanbringung 80 gelagert.

### BEZUGSZEICHENLISTE

- 1: Berstschutz
- 10: Turbine
- 11: Turbinenrad
- 12: Turbinengehäuse
- 13: Turbineneinlassöffnung, Eintrittskanal
- 14: Ringspalt
- 15: Ringkanal
- 16: Turbinenauslassöffnung
- 17: Turbinenradraum
- 18: Gehäuserücken
- 20: Lager
- 21: Welle
- 22: Lagergehäuse
- 30: Verdichter
- 31: Verdichterrad
- 32: Verdichtergehäue
- 40: Vorleitbeschaufelung
- 41: Leitschaufel
- 41K: Schaufelkopf
- 41F: Schaufelfuß
- 42: Turbinenschaufel
- 43: Grundkörper
- 44: Sackloch
- 45: Zahnriffelung
- 46: Auszugs- Innengewinde
- 50: Kanal spirale
- 51, 52: Schrauben
- 60: Stutzen
- 70: Zarge
- 80: Schaufelanbringung
- 81: Auszugsloch
- 82: Feder
- 83: Dichtung
- 200: Motor
- 100: Gasturbomaschine
- 1000: Brennkraftmaschine

- SA: Schaufelachse
- A: Achse
- AG: Abgas
- pU: Luft
- U: Umgebungsluft
- W: Rotation

## Patentansprüche

1. Turbinengehäuse (12) für eine Turbine (10) oder Gasturbomaschine (100), insbesondere einen Abgasturbolader, das als ein Radialturbinengehäuse zur Aufnahme eines mit einer Welle (21) um eine Achse (A) drehbaren Turbinenrades (11), ausgebildet ist und aufweist:
- eine Kanalspirale (50) mit einem umfänglichen Gaseinlass, die einen peripheren Ringkanal (15) ausbildet,
- einen Stutzen (60) mit einem axialen Gasauslass, der einen zentralen Turbinenradraum (17) zur Aufnahme des Turbinenrades (11) aufweist,
- eine die Kanalspirale (50) und den Stutzen (60) verbindende Zarge (70), die einen Ringspalt (14) seitlich begrenzt, welcher Ringspalt (14) den Ringkanal (15) mit dem Turbinenradraum (17) fluidverbindet zur Durchführung eines Gasstroms vom Ringkanal (15) zum Turbinenradraum (17), wobei
- in dem Ringspalt (14) eine Leiteinrichtung fest angeordnet ist zur Strömungsbeeinflussung des Gasstroms, und
- die Leiteinrichtung eine Vorleitbeschaufelung (40 mit einer Anzahl von Leitschaufel 41 aufweist, die umfänglich entlang des Ringspalts (14) angeordnet sind, wobei
- eine Leitschaufel (41) einzeln fest mit einem Grundkörper verbunden ist,
**dadurch gekennzeichnet, dass**
der Grundkörper an der Zarge (70) gehalten ist, wobei
- der Grundkörper mit einer einzelnen Leitschaufel (41) variabel aber fest an der Zarge (70) gehalten ist, derart, dass
die einzelne Leitschaufel (41) um eine in axialer Richtung weisende Achse (SA) drehbar winkeleingestellt und fest an der Zarge (70) fixiert ist.

2. Turbinengehäuse nach einem der vorhergehenden Ansprüche **dadurch gekennzeichnet, dass** der Grundkörper zylindrisch ist.

3. Turbinengehäuse nach einem der vorhergehenden Ansprüche **dadurch gekennzeichnet, dass** der Grundkörper und/oder die Leitschaufe in einer Ausnehmung, insbesondere Bohrung, in der Zarge gehalten ist.

4. Turbinengehäuse nach einem der vorhergehenden Ansprüche **dadurch gekennzeichnet, dass** der Grundkörper auf der Aussenseite und die Ausnehmung auf der Innenseite ein für einen gegenseitigen Formschluss ausgebildetes komplementäres Profil aufweisen.

5. Turbinengehäuse nach einem der vorhergehenden Ansprüche **dadurch gekennzeichnet, dass** der Grundkörper und die Ausnehmung in der Zarge eine Kerbverzahnung aufweisen.

6. Turbinengehäuse nach einem der vorhergehenden Ansprüche **dadurch gekennzeichnet, dass** die Leitschaufel über die Ausnehmung mit dem Grundkörper entnehmbar ist.

7. Turbinengehäuse nach einem der vorhergehenden Ansprüche **dadurch gekennzeichnet, dass** der Grundkörper ein auf einer zur Leitschaufel gegenüberliegenden Seite angebrachtes Auszugsmittel, insbesondere Auszugsgewinde aufweist.

8. Turbinengehäuse nach einem der vorhergehenden Ansprüche **dadurch gekennzeichnet, dass** die Leitschaufel und der Grundkörper federvorgespannt gegen einen Anschlag in der Ausnehmung in der Zarge gehalten ist.

9. Turbinengehäuse nach einem der vorhergehenden Ansprüche **dadurch gekennzeichnet, dass** die Leitschaufel mit einem Leitschaufelfuss auf dem Grundkörper befestigt ist und an einem dem Leitschaufelfuss gegenüberliegenden Leitschaufelkopf spaltfrei an einer der Ausnehmung gegenüberliegenden Innenseite der Zarge anliegt, insbesondere dicht aufsitzt

10. Turbinengehäuse nach einem der vorhergehenden Ansprüche **dadurch gekennzeichnet, dass** die Zarge und die Kanalspirale verschraubt sind

11. Turbinengehäuse nach einem der vorhergehenden Ansprüche **dadurch gekennzeichnet, dass** die ausnehmungseitige Verschraubung einen Abgasaustrittskrümmer mithält.

12. Turbinengehäuse nach einem der vorhergehenden Ansprüche **dadurch gekennzeichnet, dass** der Abgasaustrittskrümmer mit Dichtring (kompressibel, expnadiertes Graphit) gesichert die Feder zur Federvorspannung des Grundkörpers hält.

13. Turbinengehäuse nach einem der vorhergehenden Ansprüche **dadurch gekennzeichnet, dass** die Leitschaufel mittels einem Additiv-Herstellungsverfahren hergestellt ist.

14. Turbine (10) oder Gasturbomaschine 100), insbesondere Abgasturbolader, mit einem Turbinengehäuse (12) nach einem der vorhergehenden Ansprüche, wobei das Turbinengehäuse (12) ein mit einer Welle (21) um eine Achse drehbares Turbinenrad (11) und die Leiteinrichtung mit der Vorleitbeschaufelung aufweist.

15. Brennkraftmaschine (200) mit einem Motor und einem Abgasturbolader (100) nach Anspruch 14.
